# FASCICULE DE BREVET EUROPEEN

(11) **EP 0 991 725 B1**
(45) Date de publication et mention de la délivrance du brevet: **24.11.2004**
(21) Numéro de dépôt: 98920409.4
(22) Date de dépôt: 12.05.1998
(51) Int. Cl.: C09B 67/22, C09D 11/02, C09B 29/33

(54) **COMPOSITION PIGMENTAIRE AZOIQUE, PROCEDE POUR SA PREPARATION ET UTILISATIONS**
AZOPIGMENTZUSAMMENSETZUNG, DEREN HERSTELLUNGSVERFAHREN UND ANWENDUNG
PIGMENTARY AZO COMPOSITION, PREPARATION METHOD AND USE

(43) Date de publication de la demande: 12.04.2000
(73) Titulaire: Gebroeders Cappelle Naamloze Vennootschap, 8930 Menen (BE)
(72) Inventeur: VERMOORTELE, Frank, F-59000 Lille (FR); MAYER, Jean, F-59510 Hem (FR)
(74) Mandataire: Van Malderen, Joelle
(86) Numéro de dépôt international: PCT/BE1998/000066
(87) Numéro de publication internationale: WO 1998/058026

(56) Documents cités:
- EP-A- 0 079 303
- FR-A- 2 226 440
- FR-A- 2 394 584
- US-A- 3 446 640
- LIU DONGZHI ET AL: "AN INVESTIGATION INTO THE SYNERGISM OF MONOAZOACETOACETANILIDE PIGMENTS" DYES AND PIGMENTS, vol. 18, no. 1, 1 janvier 1992, pages 69-80, XP000259940 cité dans la demande
- DATABASE WPI Section Ch, Week 7604 Derwent Publications Ltd., London, GB; Class E24, AN 76-06814X XP002057434 & SU 405 382 A (BORISOVA N V) , 7 août 1975 cité dans la demande

## Description

### Objet de l'invention

La présente invention concerne une composition pigmentaire azoïque nouvelle, du type Pigment Yellow 74 modifié, le procédé pour sa préparation par synthèse en mélange, et ses utilisations.

### Arrière-plan technologique à la base de l'invention

Les techniques de production des colorants et pigments par réaction de diazo-copulation sont bien connues, et un grand nombre de pigments ont été obtenus de cette manière.

Le pigment répertorié dans le Color Index comme Pigment Yellow 74 est obtenu par diazotation de la 2-méthoxy-4-nitro-aniline (PNOA) et copulation sur l'acétylacéto-2-anisidide (AAOA). C'est un pigment de couleur jaune très verdâtre, qui est largement utilisé dans l'industrie des peintures et des encres d'imprimerie.

Le PY 74 se trouve commercialement sous deux formes, l'une transparente et de force colorante élevée, l'autre opaque et de force colorante plus faible, utilisée principalement en peinturés, où les propriétés couvrantes sont très recherchées.

Selon le document EP 0079303 A, la forme transparente est obtenue par chauffage après copulation à 70 °C et filtration immédiate. La forme opaque résulte de la même réaction de copulation et du chauffage du mélange réactionnel à l'ébullition pendant une heure avant filtration. Il est indiqué que la différence de force colorante résulte de la différence des dimensions cristallines plutôt que de formes cristallines différentes.

Le but visé par ce document est d'améliorer la forme opaque du PY 74 pour surmonter le problème lié à la perte de force colorante au stockage par nuançage (modification chimique) du PY 74 par 1 à 20%, et de préférence 2,5 à 7%, d'un autre pigment jaune monoazoique basé sur l'acétylacéto-2-anisidide.

Le document mentionne que le mélange peut être obtenu :
- par mélange à sec des deux constituants,
- mélange des gâteaux de filtration des deux pigments, suivi du séchage,
- par une diazotation d'un mélange des précurseurs aminés (anilines) respectifs, suivie d'une copulation, d'une ébullition, d'une filtration et d'un séchage classique,
- par une diazotation séparée des deux précurseurs, suivie d'un mélange des deux solutions de composés diazotés, copulation, ébullition, filtration et séchage,
- par diazotation et copulation des précurseurs en des opérations séparées et mélange des boues aqueuses, suivies des opérations classiques d'ébullition, filtration et séchage ou encore
- par diazotation et copulation d'un des précurseurs suivie d'une diazotation séparée du second précurseur et copulation en présence du premier pigment suivis des opérations classiques d'ébullition, filtration et séchage.

Le composé de nuançage est obtenu à partir d'une ou plusieurs amines de formule (R₁)ₘ-(R₂)ₙ-C₆H₄-NH₂ (m+n ≤ 3), où R₁, R₂ représentent des groupements alkyle, alkoxy, halogène (en particulier chlore) ou nitro.

Les amines 4-nitro-2-amino-anisole, 4-méthyl-2-nitro-aniline, 2-méthyl-5-nitro-aniline et 3-nitro-4-amino-anisole sont décrites comme particulièrement intéressantes à titre de précurseurs.

Dans le document FR 2394584 A, on revendique un mélange constitué de 75 à 85% en poids de PY 74 et 25 à 15% en poids d'un pigment identifié dans le Color Index comme Pigment Yellow 65 (PY 65).

Le mélange peut être obtenu par un procédé . caractérisé en ce que l'on diazote de 0,75 à 0,85 équivalent molaire de 5-nitro-2-amino-anisole et de 0,25 à 0,15 équivalent molaire de 3-nitro-4-amino-anisole et copule les composés diazoïques avec l'acétylacéto-amino-2-anisole (copulation dite mixte). On indique cependant que le mélange peut être réalisé par mélange intime des constituants dans le rapport indiqué.

On indique que ces mélanges constituent un jaune tirant davantage sur le rouge que le PY 74. Ils ont un pouvoir tinctorial et une nuance très similaires à ceux de jaune pigment 12 (PY 12) utilisé sur une grande échelle dans l'industrie de l'impression, mais ils s'en distinguent par une solidité à la lumière nettement améliorée ainsi que par une transparence plus élevée, un brillant plus fort et une bonne fluidité dans des systèmes de liants. Ces mélanges sont supérieurs à des mélanges analogues que l'on obtient en utilisant le 3-nitro-4-amino-anisole et la 4-chloro-2-nitro-aniline comme composantes de diazotation.

Diverses utilisations pour la teinture, pour l'impression de papier et de matières synthétiques, dans la préparation d'encres d'impression et de peintures sont mentionnées.

D'autres mélanges de pigments à base de PY 74 ont été décrits notamment dans le document GB 1 348 509 A (mélanges dérivés d'un composé diazoïque et de 0,5 à 20% d'un ou deux copulants polaires) et dans le document FR 2226440 A (dérivés de 4-nitro-aniline).

Dans le document FR 2275533, on traite le PY 74 avec des sels d'alkylamines ou d'aralkylamines et des colophanes, afin d'améliorer la stabilité de la transparence à chaud, la dispersabilité et la rhéologie. Le PY 74 peut être éventuellement nuancé en recourant à des composants visant à obtenir une nuance plus rouge.

Finalement, dans le document EP 0012944 A, on vise à accroître la stabilité à la recristallisation par l'utilisation de mélanges de pigments dérivés de plusieurs amines ou copulants, dont 1 à 20% contiennent des groupes acides qui subissent ensuite un traitement par des composés cationiques quaternaires.

D'autres documents font état d'améliorations de pigments monoazoïques obtenus par nuançage (coprécipitation lors de la synthèse).

Le document Database WPI, Section Ch, Week 7604, Derwent Publications Ltd., London, GB; Class E24, AN 76-06814X, XP002057434 & SU 405 382 A revendique un pigment de haute qualité obtenu par diazotation d'un mélange à base de 4-chloro-2-nitroaniline et copulation sur l'acétylacétom-xylidide.

Le document US 3 446 640 A mentionne des pigments transparents et stables obtenus par diazotation de 4-chloro-2-nitroaniline et copulation sur un mélange d'acétylacétanilide et d'acétylacéto-m-xylidide.

Enfin, le document "An investigation in the synergism of monoazoacetoacetanilide pigments", Liu Dongzhi et al., Dyes and Pigments, 18, no. 1, 1 January 1992, pp. 69-80, indique que lorsqu'il y a synergie, on obtient des pigments de force colorante et transparence améliorées liées à des dimensions plus faibles des cristaux primaires.

Dans les encres pour impression, on préfère en général le produit le plus transparent et de force colorante maximale.

Le document EP 0079303 A précité indique les modifications de procédé qui permettent d'obtenir la forme transparente ou la forme opaque.

On peut, en fait, obtenir toutes les variantes de produit, du plus transparent au plus opaque, par modification des paramètres du procédé, le principal étant l'intensité du chauffage (température et durée) après la copulation : quand on augmente le chauffage, la transparence et la force colorante diminuent, de même que le brillant de l'encre.

Cependant, d'autres caractéristiques sont corrélées à ces mêmes propriétés, qui limitent les possibilités. Il est généralement admis que les propriétés d'écoulement (rhéologie) de l'encre pigmentée tout particulièrement deviennent de plus en plus mauvaises au fur et à mesure qu'augmentent force colorante et transparence. Ceci est particulièrement gênant dans la fabrication d'encres concentrées (à haute teneur en pigment).

La présente invention vise à fournir des compositions à base de PY 74 qui permettent d'atteindre un optimum pratique supérieur aux produits actuels, en conciliant les propriétés a priori contradictoires :
- force et transparence d'une part,
- bonnes propriétés d'écoulement d'autre part.

### Eléments caractéristiques de l'invention

Il a été trouvé que l'on obtient des compositions pigmentaires pour encres supérieures aux produits actuels par copulation sur l'acétylacéto-2-anisidide d'un mélange de sels de diazonium obtenu à partir de 98 à 85% en moles de 2-méthoxy-4-nitro-aniline et de 2 à 15% en moles de 4-chloro-2-nitro-aniline et de préférence, de 95 à 88% en moles de 2-méthoxy-4-nitro-aniline et de 5 à 12% en moles de 4-chloro-2-nitro-aniline.

Cette composition pigmentaire permet d'obtenir un compromis supérieur, c'est-à-dire une rhéologie meilleure pour une transparence donnée, ou une transparence et force supérieures à rhéologie égale, ou toute autre solution intermédiaire par modification des conditions de chauffage de la formation du pigment après copulation. Les compositions selon l'invention présentent en outre l'avantage de posséder des caractéristiques de couleur (nuance, pureté) pratiquement identiques à celles du PY 74 pur, contrairement à d'autres mélanges de nuançage qui ont déjà été proposés.

Les compositions pigmentaires obtenues se prêtent aux techniques classiques de traitement des pigments déjà connues telles que l'addition de résines, de tensioactifs, etc.

Elles permettent également, si l'on souhaite, le recours aux opérations de modifications et de nuançages classiques.

La composition peut être obtenue par diazotation d'un mélange d'amines constitué de 98 à 85% en moles de 2-méthoxy-4-nitro-aniline et de 2 à 15% en moles de 4-chloro-2-nitro-aniline et copulation avec l'acétylacéto-2-anisidide ou encore par diazotation séparée de 2-méthoxy-4-nitro-aniline et de 4-chloro-2-nitro-aniline, mélange des deux sels de diazonium obtenus à raison de 98 à 85% en moles pour le dérivé de 2-méthoxy-4-nitro-aniline et de 2 à 15% en moles pour le dérivé de 4-chloro-2-nitro-aniline et copulation simultanée avec l'acétylacéto-2-anisidide.

Les compositions pigmentaires conviennent pour la réalisation d'encres d'imprimerie ou encore pour la réalisation d'un concentré pigmentaire destiné à la fabrication d'encre d'imprimerie.

### Exemples

Les exemples suivants illustrent la présente invention. Les pourcentages s'entendent en poids, sauf indication contraire.

Avec chacun de ces produits, on réalise un concentré à 18% de pigment par broyage dans un vernis constitué de la façon suivante :

| | |
|---|---|
| nitrocellulose type CA4 A20 (SS 1/4s) | 14,6 % |
| phtalate de dioctyle | 3,0 % |
| acétate d'éthyle | 26,4 % |
| éthanol | 45,3 % |
| dowanol® PB 40 | 7,3 % |
| (éther de propylène glycol de la firme Dow Chemical) n-propanol | 3,4 % |
| | 100,0 % |

La rhéologie de ce concentré est mesurée à 25 °C à l'aide d'un viscosimètre de type "cône et plateau". Dans le tableau 1 sont indiquées les viscosités mesurées pour trois taux de cisaillement différents : 22, 43 et 200 s⁻¹.

On réalise ensuite par dilution avec le même vernis, des encres à 8% de pigment et on applique ces encres sur papier à bande noire à l'aide d'un applicateur à spirale motorisé de type "Hand Coater" No. 2 de la firme "RK Print Coat Instruments Ltd.", soit avec une épaisseur humide de 12 µm.

On réalise également des applications en ton dégradé dans un rapport de 1 partie de pigment pour 10 parties de dioxyde de titane et on applique sur papier dans les mêmes conditions.

Les caractéristiques de couleur sont mesurées en ton plein et en dégradé à l'aide d'un spectrophotocolorimètre et calculées dans le système L,A,B, avec le pigment de l'exemple 1 pour référence. La transparence est cotée par évaluation visuelle sur la bande noire, également par rapport à l'exemple 1.

Le tableau 1 indique pour chaque pigment la couleur (ΔH) en ton plein et dégradé, la transparence, la force colorante et la rhéologie des concentrés à 18%.

### Exemple 1 (référence - PY 74 pur)

On empâte soigneusement, de manière à former le chlorhydrate, 75,6 g de 5-nitro-2-amino-anisole avec 145 g d'acide chlorhydrique à 32% et 200 g d'eau. On refroidit avec de la glace et on diazote à 0-5 °C avec 80 g d'une solution de nitrite de sodium à 40%. On maintient deux heures à 5-7 °C en présence d'excès de nitrite, puis on filtre la solution et on enlève l'excès nitreux à l'aide d'acide amidosulfonique.

On dissout 99,2 g d'acétylacéto-o-anisidide dans 560 g d'eau et 21,3 g d'hydroxyde de sodium et on ajoute cette solution à une solution de 11,25 g d'un dérivé éthoxylé de N-alkyl propylène diamine (Dinoramox® S12 de la firme CECA) dans 850 g d'eau à 20 °C. On reprécipite alors le copulant avec une solution de 32,67 g d'acide acétique dans 250 g d'eau et on effectue la copulation en ajoutant en une heure la solution du sel de diazonium. Au cours de la copulation, le pH diminue et lorsqu'il atteint 4,2, on ajoute une solution d'hydroxyde de sodium à 10% de manière à le maintenir à 4,2.

La copulation faite, on ajoute une solution de 11,57 g de colophane dissous dans 115 ml d'eau avec 1,27 g d'hydroxyde de sodium.

On chauffe à 80 °C et on maintient une heure à cette température. On filtre et lave le pigment, puis on le sèche à 70 °C en étuve de laboratoire et on le broie.

### Exemple 2 (référence PY 74 pur plus transparent)

On procède comme dans l'exemple 1, mais après chauffage à 80 °C, on filtre immédiatement, sans attendre.

Le pigment obtenu est plus transparent que celui de l'exemple 1, mais ses propriétés rhéologiques sont inférieures (cf. tableau 1) .

### Exemple 3 (selon l'invention)

On procède comme dans l'exemple 1, mais en remplaçant les 75,6 g de 5-nitro-2-amino-anisole par 69,55 g de 5-nitro-2-amino-anisole et 6,21 g de 4-chloro-2-nitro-aniline.

Le pigment obtenu possède des propriétés d'écoulement meilleures que celui de l'exemple 1 et sa force colorante et sa transparence sont supérieures : elles sont même supérieures à celles de l'exemple 2. Ses caractéristiques de couleur sont très voisines (cf. tableau 1) .

### Exemple 4 (nuançage avec le Pigment Yellow 65)

On procède comme dans l'exemple 3, mais en remplaçant les 6,21 g de 4-chloro-2-nitro-aniline par 6,05 g de 3-nitro-4-amino-anisole (cf. document FR 2 394 584 A)

Le produit obtenu est transparent, de propriétés rhéologiques inférieures à celles de l'exemple 1, et sa nuance est beaucoup plus rougeâtre (cf. tableau 1).

**Tableau 1**

| **Exemple N°** | **Ton plein** | | **Ton dégradé** | | **Concentré à 18% : viscosité en mPa.s** | | |
|---|---|---|---|---|---|---|---|
| | **ΔH** | **Transparence** | **ΔH** | **Force colorante** | **D=22s**^{**-1**} | **D=43**^{**s-1**} | **D=200s**^{**-1**} |
| 1 | 0 | 0 | 0 | 100% | 4,4 | 2,5 | 0,95 |
| 2 | 0,54 | +2 | 0,45 | 103,6% | 4,44 | 2,64 | 1,56 |
| 3 | -0,11 | +4 | 0,30 | 104,3% | 3,10 | 1,16 | 0,51 |
| 4 | -2,63 | +5 | -2,17 | 102,1% | 4,61 | 2,71 | 1,45 |

## Revendications

1. Composition pigmentaire transparente pour encres **caractérisée en ce qu'**elle est obtenue par copulation avec l'acétylacéto-2-anisidide d'un mélange de sels de diazonium obtenus à partir de 98 à 85% en moles de 2-méthoxy-4-nitro-aniline et de 2 à 15% en moles de 4-chloro-2-nitro-aniline.

2. Composition selon la revendication 1, **caractérisée en ce que** le mélange de sels de diazonium contient de 95 à 88% en moles de 2-méthoxy-4-nitro-aniline et de 5 à 12% en moles de 4-chloro-2-nitro-aniline.

3. Composition selon la revendication 1 ou 2, **caractérisée en ce qu'**elle maintient essentiellement la couleur propre du Pigment Yellow 74, en formant une composition pigmentaire pour encres de force colorante et transparence élevées, tout en maintenant de bonnes propriétés d'écoulement.

4. Procédé de préparation d'une composition pigmentaire transparente pour encres **caractérisé en ce que** l'on procède à la diazotation d'un mélange d'amines constitué de 98 à 85% en moles de 2-méthoxy-4-nitro-aniline et de 2 à 15% en moles de 4-chloro-2-nitro-aniline et à la copulation sur l'acétylacéto-2-anisidide.

5. Procédé selon la revendication 4, **caractérisé en ce que** l'on procède à la diazotation d'un mélange d'amines constitué de 95 à 88% en moles de 2-méthoxy-4-nitro-aniline et de 5 à 12% en moles de 4-chloro-2-nitro-aniline et à la copulation sur l'acétylacéto-2-anisidide.

6. Procédé de préparation d'une composition pigmentaire transparente pour encres, **caractérisé en ce que** l'on procède à la diazotation séparée de 2-méthoxy-4-nitro-aniline et de 4-chloro-2-nitro-aniline, **en ce qu'**on mélange les deux sels de diazonium obtenus à raison de 98 à 85% en moles pour le dérivé de 2-méthoxy-4-nitro-aniline et de 2 à 15% en moles pour le dérivé de 4-chloro-2-nitro-aniline et procède à la copulation simultanée sur l'acétylacéto-2-anisidide.

7. Utilisation d'une composition pigmentaire selon l'une quelconque des revendications 1 à 3 pour la réalisation d'encre d'imprimerie.

8. Utilisation d'une composition pigmentaire selon l'une quelconque des revendications 1 à 3 pour la réalisation d'un concentré pigmentaire destiné à la fabrication d'encre d'imprimerie.

## Patentansprüche

1. Transparente Pigmentzusammensetzung für Druckfarben, **dadurch gekennzeichnet, daß** sie durch Kupplung eines aus 98 bis 85 Molprozent 2-Methoxy-4-nitro-anilin und 2 bis 15 Molprozent 4-Chloro-2-nitro-anilin erhaltenen Gemischs von Diazoniumsalzen mit dem Acetylaceto-2-anisidid erhalten wird.

2. Zusammensetzung gemäß Anspruch 1, **dadurch gekennzeichnet, daß** das Gemisch von Diazoniumsalzen 95 bis 88 Molprozent 2-Methoxy-4-nitro-anilin und 5 bis 12 Molprozent 4-Chloro-2-nitro-anilin enthält.

3. Zusammensetzung gemäß Anspruch 1 oder 2, **dadurch gekennzeichnet, daß** sie im wesentlichen die Eigenfarbe des Pigments Yellow 74 aufrechterhält, wobei sie eine Pigmentzusammensetzung für Druckfarben mit hoher Färbekraft und hoher Transparenz bildet, während sie zugleich gute Fließeigenschaften aufrechterhält.

4. Verfahren zur Herstellung einer transparenten Pigmentzusammensetzung für Druckfarben, **dadurch gekennzeichnet, daß** man die Diazotierung eines Gemischs von Aminen, das aus 98 bis 85 Molprozent 2-Methoxy-4-nitro-anilin und 2 bis 15 Molprozent 4-Chloro-2-nitro-anilin besteht, und die Kupplung auf das Acetylaceto-2-anisidid ausführt.

5. Verfahren gemäß Anspruch 4, **dadurch gekennzeichnet, daß** man die Diazotierung eines Gemischs von Aminen, das aus 95 bis 88 Molprozent 2-Methoxy-4-nitroanilin und 5 bis 12 Molprozent 4-Chloro-2-nitro-anilin besteht, und die Kupplung auf das Acetylaceto-2-anisidid ausführt.

6. Verfahren zur Herstellung einer transparenten Pigmentzusammensetzung für Druckfarben, **dadurch gekennzeichnet, daß** man die getrennte Diazotierung von 2-Methoxy-4-nitro-anilin und von 4-Chloro-2-nitroanilin ausführt, daß man die erhaltenen zwei Diazoniumsalze im Verhältnis 98 bis 85 Molprozent des Derivates von 2-Methoxy-4-nitro-anilin zu 2 bis 15 Molprozent des Derivates von 4-Chloro-2-nitro-anilin mischt, und daß man die gleichzeitige Kupplung auf das Acetylaceto-2-anisidid ausführt.

7. Verwendung einer Pigmentzusammensetzung gemäß irgendeinem der Ansprüche 1 bis 3 für die Verwirklichung von Druckfarbe.

8. Verwendung einer Pigmentzusammensetzung gemäß irgendeinem der Ansprüche 1 bis 3 für die Verwirklichung eines Pigmentkonzentrats, das für die Herstellung von Druckfarbe bestimmt ist.

## Claims

1. Transparent pigmentary composition for inks **characterized in that** it is obtained by coupling a mixture of diazonium salts obtained from 98 to 85% in moles of 2-methoxy-4-nitro-aniline and 2 to 15% in moles of 4-chloro-2-nitro-aniline with acetylaceto-2-anisidide.

2. Composition according to claim 1, **characterized in that** the mixture of diazonium salts contains from 95 to 88% in moles of 2-methoxy-4-nitro-aniline and from 5 to 12% in moles of 4-chloro-2-nitro-aniline.

3. Composition according to claim 1 or 2, **characterized in that** it essentially maintains the actual colour of Pigment Yellow 74, while forming a pigmentary composition for inks of high colouring power and transparency, while maintaining good flow properties.

4. Preparation process for a transparent pigmentary composition for inks **characterized in that** a mixture of amines constituted by 98 to 85% in moles of 2-methoxy-4-nitro-aniline and by 2 to 15% in moles of 4-chloro-2-nitro-aniline is diazotized and coupled with acetylaceto-2-anisidide.

5. Process according to claim 4, **characterized in that** a mixture of amines constituted by 95 to 88% in moles of 2-methoxy-4-nitro-aniline and by 5 to 12% in moles of 4-chloro-2-nitro-aniline is diazotized and coupled with acetylaceto-2-anisidide.

6. Preparation process for a transparent pigmentary composition for inks, **characterized in that** 2-methoxy-4-nitro-aniline and 4-chloro-2-nitro-aniline are diazotized separately, **in that** the two diazonium salts obtained are mixed in a ratio of 98 to 85% in moles for the derivative of 2-methoxy-4-nitro-aniline and 2 to 15% in moles for the derivative of 4-chloro-2-nitro-aniline followed by simultaneous coupling with acetylaceto-2-anisidide.

7. Use of a pigmentary composition according to any one of claims 1 to 3 for producing printing ink.

8. Use of a pigmentary composition according to any one of claims 1 to 3 for producing a pigmentary concentrate intended for the production of printing ink.
